# EUROPÄISCHE PATENTSCHRIFT

(11) **EP 0 414 162 B1**
(45) Veröffentlichungstag und Bekanntmachung des Hinweises auf die Patenterteilung: **22.09.1993**
(21) Anmeldenummer: 90115850.1
(22) Anmeldetag: 18.08.1990
(51) Int. Cl.: F16B 5/00, F16B 13/00, F16B 12/10

(54) **Einstellbares Distanzstück**
Adjustable spacer
Pièce d'écartement ajustable

(30) Priorität: 21.08.1989 DE 3927529
(43) Veröffentlichungstag der Anmeldung: 27.02.1991
(73) Patentinhaber: A. Raymond & Cie, 38028 Grenoble (FR)
(72) Erfinder: André, Guy, F-10300 Saint Savine (FR); Barnavol, Charles, F-38100 Grenoble (FR)
(74) Vertreter: Kirchgaesser, Johannes, Dipl.-Ing.

(56) Entgegenhaltungen:
- CH-A- 656 190
- CH-A- 670 135
- DE-A- 2 756 537
- DE-B- 1 475 131
- DE-C- 3 620 005

## Beschreibung

Die Erfindung geht gemäß dem Oberbegriff des Anspruchs 1 aus von einem einstellbaren Distanzstück, welches im Kraftfahrzeugbau, beispielsweise bei der Befestigung einer Türverkleidung, verwendet wird.

Bei einem bekannten Distanzstück dieser Art (DE-C-36 20 005) besteht das Verankerungsteil aus einer metallischen, topfförmigen Nietmutter, welche mit einer Ringfalz in ein Befestigungsloch in der Türstruktur eingesetzt und durch Umbördeln der Ringfalz in diesem Loch verankert wird. Die Befestigung der auf der Stellschraube aufliegenden Türaußenhaut erfolgt mit einer Schraube, welche durch das zentrale Durchgangsloch der Stellschraube hindurchgeführt und in ein metrisches Gewindeloch im Topfboden der Nietmutter eingedreht wird.

Die Befestigung des Verankerungsteils auf der Türkonstruktion durch Umbördeln einer Ringfalz im Befestigungsloch bedeutet jedoch einen besonderen Arbeitsgang und ist daher für manche Befestigungssituationen, wie z.B. die Befestigung eines Kühlergrillgitters, zu umständlich und aufwendig. Das gleiche gilt auch für die Herstellung der metallischen Nietmutter und insbesondere das Einschneiden der beiden Gewindegänge.

Ausgehend von diesem Stand der Technik ist es die Aufgabe der Erfindung, das vorgenannte Distanzstück so zu gestalten, daß bei Verwendung von Kunststoff zu dessen Herstellung die Befestigung des Verankerungsteils im Loch des Bauteils erheblich vereinfacht wird und das Distanzstück gleichzeitig wesentlich kostengünstiger herzustellen ist.

Diese Aufgabe wird durch die im Anspruch 1 angegebene Erfindung gelöst.

Die bloße Ausbildung des unteren Bereichs der Stellschraube als Spreizdübel würde für sich allein das Befestigungsproblem noch nicht lösen, da der Spreizdübel beim Eindrehen der Schraube die Tendenz hätte, sich im Schaft des Verankerungsteils zu drehen. Diese Tendenz wird erst durch die rasche Ausdehnung der Spreizsegmente in Verbindung mit der Bremswirkung der Rippen in den Rillen vermieden, da die Rippen beim Eindrehen der Holzschraube von den sich aufspreizenden Dübelsegmenten in die äußeren Rillen gedrückt werden und sich dort formschlüssig einlegen. Auf diese Weise läßt sich an jeder Befestigungsstelle eine optimale Abstandsregulierung und gleichzeitig eine solide Verankerung erreichen.

Durch die baulichen Maßnahmen nach Anspruch 2 wird einerseits ein problemloses Eindrehen der Stellschraube in den Schaft des Verankerungsteils gewährleistet und andererseits dafür gesorgt, daß die Rippen nach bereits geringem Auseinandergehen der Spreizsegmente in die innenliegenden Rillen des Verankerungsteils eintauchen und die Stellschraube dadurch unmittelbar nach dem Eindrehen der Holzschraube gegen Verdrehung gesichert ist.

Durch die erfindungsgemäße Schlitzung des unteren Schaftbereichs des Verankerungsteils gemäß Anspruch 3 wird darüberhinaus noch erreicht, daß sich die Spreizkraft der Schraube über die Dübelsegmente und den Schaft auf die Stützbeine übertragen kann. Dies hat den Vorteil, daß beim Anziehen der Schraube gleichzeitig die Oberkanten der Stützbeine fester gegen den Lochrand gedrückt werden, so daß im Langloch das zunächst noch verschiebbare Verankerungsteil nach dem Eindrehen der Schraube ebenfalls fest verankert ist.

Ein bevorzugtes Ausführungsbeispiel der Erfindung ist in der Zeichnung dargestellt und soll nachfolgend näher erläutert werden.

Es zeigt
- Fig. 1: eine Stellschraube im Längsschnitt gemäß Linie I - I in Fig. 2,
- Fig. 2: die Stellschraube in Draufsicht,
- Fig. 3: einen Querschnitt durch das Spreizteil gemäß Linie III - III in Fig. 1,
- Fig. 4: das zugehärige Verankerungsteil im Längsschnitt gemäß Linie IV - IV in Fig. 5,
- Fig. 5: eine Draufsicht auf das Verankerungsteil, Fig. 6 einen Querschnitt durch den Schaft gemäß Linie VI - VI in Fig. 4,
- Fig. 7: die Stellschraube vor dem Eindrehen in das Verankerungsteil,
- Fig. 8: das vormontierte Distanzstück,
- Fig. 9: einen Schnitt durch den Schaft gemäß Linie IX - IX,
- Fig. 10: das in der Trägerplatte eingeclipste Distanzstück beim Einstellen der Stützhöhe,
- Fig. 11: das Distanzstück im fertigen Einbauzustand und
- Fig. 12: einen Schnitt durch den gespreizten Schaft gemäß Linie XII - XII.

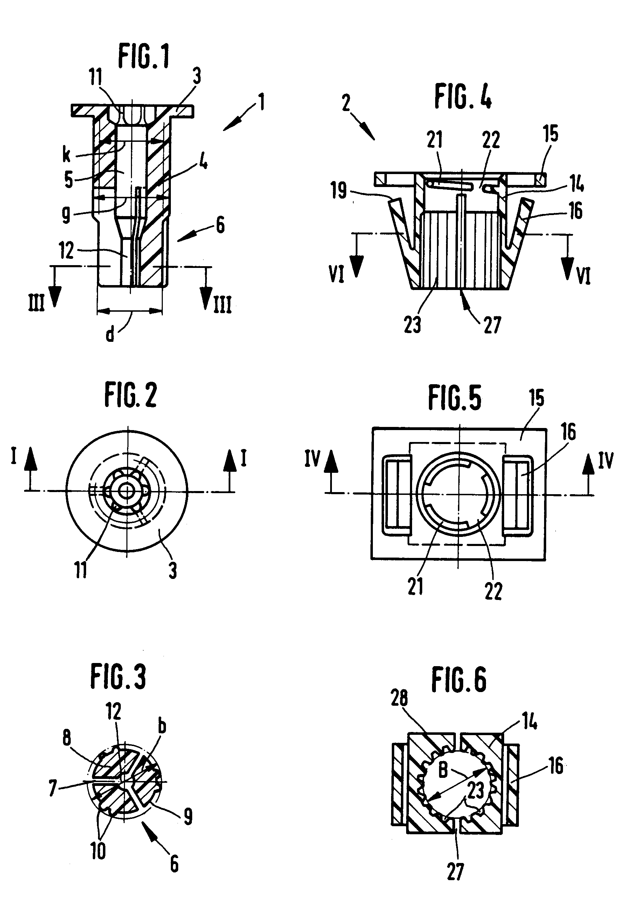

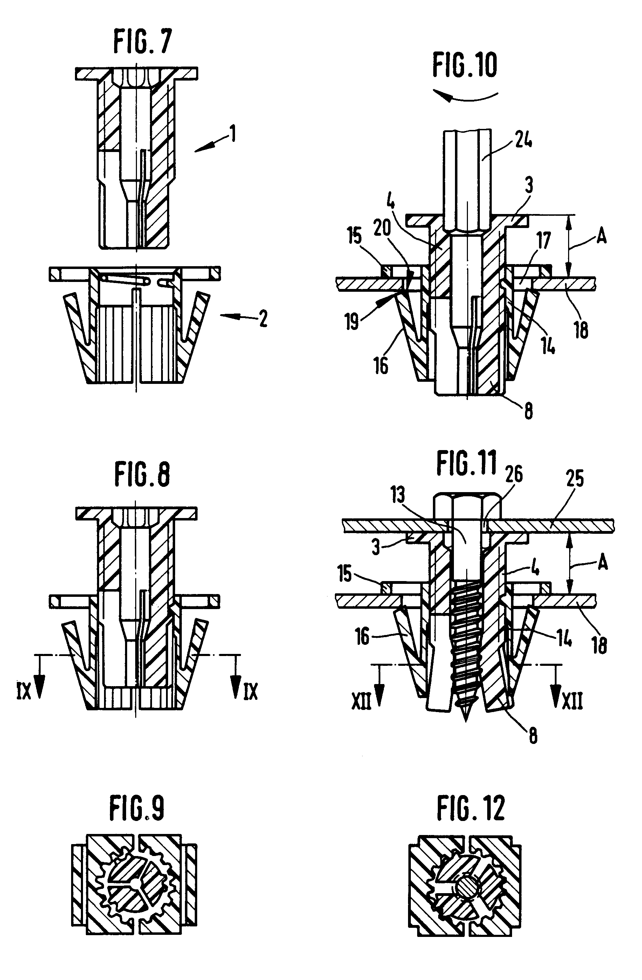

Das in den Figuren 7 - 12 dargestellte Distanzstück setzt sich zusammen aus einer Stellschraube 1 (Fig. 1 - 3) und einem Verankerungsteil 2 (Fig. 4 - 6). Es ist bestimmt zur abstandsveränderlichen Abstützung und Befestigung von zwei plattenförmigen Bauteilen und kann beispielsweise im Kraftfahrzeugbau zur Befestigung des Schutzgitters vor dem Kühler verwendet werden.

Die Stellschraube 1 ist aus hartelastischem Kunststoff hergestellt und besteht aus einem Stützkopf 3, einem Gewindeschaft 4 und einem daran anschließenden dübelartigen Spreizteil 6, das durch drei gleichmäßig über den Umfang verteilte Längsschlitze 7 unterteilt ist. Die durch die Aufschlitzung gebildeten Spreizsegmente 8 entsprechen in ihrem Außendurchmesser "d" dem Kerndurchmesser "k" des Gewindeschaftes 4 und weisen an ihrem Außenmantel 9 pro Segment 8 je zwei achsparallel verlaufende Rippen 10 auf. Im Stützkopf 3 befindet sich eine Innensechskantaussparung 11, von dessen Grund sich ein Durchgangsloch 5 für eine Holzschraube 13 anschließt. Dieses Loch 5 verjüngt sich im unteren Spreizteil 6 zu einem kleineren Durchgangsloch 12, so daß die Spreizsegmente 8 beim Eindrehen der Schraube 13 radial nach außen gedrückt werden.

Das Verankerungsteil 2 (Fig. 4 - 6) ist ebenfalls aus hartelastischem Kunststoff hergestellt und besteht aus einem Hohlschaft 14 mit einem Flansch 15 am oberen Ende und zwei Stützbeinen 16, die am unteren Ende angeformt sind und vom Schaft 14 schräg nach oben abstehen. Die Außenwände 28 des Schaftes 14 sind quadratisch zueinander angeordnet und dazu bestimmt, in ein rechteckiges Loch 17 einer Trägerplatte 18 eingesteckt zu werden (Fig. 10). Das Verankerungsteil 2 stützt sich hierbei mit dem Flansch 15 auf der Oberseite der Trägerplatte 18 ab und hintergreift das Befestigungsloch 17 mit den Stützbeinen 16, die beim Eindrücken des Schaftes 14 zunächst nach innen ausweichen und nach dem Passieren des Lochrandes 20 wieder nach außen federn, wobei sie sich mit der Oberkante 19 von unten gegen den Lochrand 20 abstützen. Zwischen den Stützbeinen 16 ist der Hohlschaft 14 außerdem noch durch achsparallele Schlitze 27 bis dicht unter den Flansch 15 geteilt.

Der Schaft 14 ist innen zylindrisch ausgebildet entsprechend dem Außendurchmesser "g" des Gewindeschaftes 4 und weist in seinem oberen Bereich einen Gewindegang 21 auf, der entsprechend der Lage und der Breite von je zwei benachbarten Rippen 10 der Stellschraube 1 durch Aussparungen 22 unterbrochen ist. Unterhalb des Gewindegangs 21 sind an der Innenseite des Schaftes 14 parallel zur Schaftachse verlaufende Rillen 23 eingeformt, die in Form und Abstand voneinander den Rippen 10 entsprechen und deren innerer Berührungsdurchmesser "B" geringfügig größer ist als der äußere Berührungsdurchmesser "b" der Rippen 10.

Beim Zusammenfügen des Distanzstücks wird die Stellschraube 1, wie in Fig. 7 gezeigt, von oben in den Schaft 14 des Verankerungsteils 2 eingeführt, wobei die Rippen 10 so ausgerichtet werden, daß diese genau durch die Aussparungen 22 hindurchgleiten können. Die Stellschraube 1 wird hierbei so weit eingeführt, bis das Außengewinde 5 auf den Gewindegang 21 trifft. Sodann wird die Stellschraube 1 ein- bis zweimal im Uhrzeigersinn gedreht, womit das Distanzstück für die Anlieferung fertig vormontiert ist (Fig. 8).

Beim bestimmungsgemäßen Einsatz wird das vormontierte Distanzstück mit den Stützbeinen 16 vorweg in das rechteckige Befestigungsloch 17 einer Trägerplatte 18 eingeclipst, wobei der Schaft 14 mit dem Flansch 15 auf der Trägerplatte 18 aufliegt und die Stützbeine 16 mit ihrer Oberkante 19 - wie bereits beschrieben - sich zunächst locker von der Rückseite her gegen den Lochrand 20 abstützen, so daß eine seitliche Verschiebung zum Ausrichten des Distanzstückes noch möglich ist.

Sodann wird die Stellschraube 1 mittels eines Sechskantschlüssels 24 soweit in das Verankerungsteil 2 eingedreht, bis der gewünschte Abstand "A" von der Oberkante der Trägerplatte 18 bis zur Oberkante des Stützkopfes 3 eingestellt ist (Fig. 10). Nun kann die zweite Platte 25 auf den Stützkopf 3 aufgelegt und mittels einer Holzschraube 13 auf der Stellschraube 1 festgeschraubt werden. Zu diesem Zweck befindet sich in der zweiten Platte 25 ein Loch 26 zum Durchführen der Schraube 13. Sobald die Schraube 13 in das dübelartige Spreizteil 6 eindringt, werden die Spreizsegmente 8 rasch zur Seite gedrückt, wobei die Rippen 10 sich in die gegenüberliegenden Rillen 23 eingraben (Fig. 12). Dadurch ist die Stellschraube 1 im Schaft 14 des Verankerungsteils 2 gegen Verdrehung gesichert und die Schraube 13 läßt sich problemlos festziehen.

Hierbei wird die Spreizkraft der Schraube 13 über die Spreizsegmente 6 und den durch die Schlitze 27 geteilten Schaft auf die Stützbeine 16 übertragen, die wiederum mit ihren Stützkanten 19 fest gegen den Lochrand 20 gedrückt werden, so daß das Verankerungsteil 2 nunmehr im Langloch 17 ebenfalls fest verankert ist.

Selbstverständlich kann das erfindungsgemäße Distanzstück in Verbindung mit einer Senkschraube auch lediglich als Abstandshalter oder Anschlag oder Auflage benützt werden, wobei der vorgenannte Verankerungseffekt in Verbindung mit der genauen Einstellmöglichkeit der Stützschraube und deren Festlegung voll zum Tragen kommt.

## Patentansprüche

1. Einstellbares Distanzstück aus Kunststoff zur abstandsveränderlichen Befestigung von zwei plattenförmigen Bauteilen, bestehend aus einem in einem Befestigungsloch des einen Bauteils einsetzbaren Verankerungsteil mit einem Hohlschaft mit Innengewinde und einer in den Schaft eindrehbaren Stellschraube mit Stützkopf und zentralem Durchgangsloch
**dadurch gekennzeichnet**, daß die Stellschraube (1) unterhalb des Gewindeschafts (4) ein mehrfach geschlitztes, dübelartiges Spreizteil (6) mit einem verengten Durchgangsloch (12) zum Eindrehen einer Holzschraube (13) aufweist, und daß an den durch die Längsschlitze (7) entstehenden Dübelsegmenten (8) auf deren Außenmantel (9) achsparallele Rippen (10) vorgesehen sind, während der Hohlschaft (14) des Verankerungsteils (2) unterhalb des Innengewindes (21) mit achsparallelen Rillen (23) versehen ist, in welche die Rippen (10) beim Aufspreizen der Dübelsegmente (8) durch das Eindrehen der Schraube (1,3) formschlüssig eingreifen.

2. Einstellbares Distanzstück nach Anspruch 1, dadurch gekennzeichnet, daß der Außendurchmesser "d" des Spreizteils (6) gleich dem Kerndurchmesser "k" des Gewindeschafts (4) ist, daß ferner der Berührungsdurchmesser "b" der Rippen (10) gleich dem äußeren Gewindedurchmesser "g" des Gewindeschaftes (4) und geringfügig kleiner als der Berührungsdurchmesser "B" der Rillen (23) ist, und daß schließlich das Innengewinde (21) des Verankerungsteils (2) aus nur einem einzigen Gewindegang (21) besteht, welcher entsprechend der Lage der Rippen (10) auf dem Außenmantel (9) des Spreizteils (6) durch im gleichen Abstand verteilte Aussparungen (22) unterbrochen ist.

3. Einstellbares Distanzstück nach Anspruch 1 oder 2, bei welchem der Gewindeschaft (4) des Verankerungsteils (2) mit einem oberen Flansch (15) auf dem Rand (20) des Befestigungsloches (17) aufliegt und am unteren Ende mit schräg nach oben abstehenden, zusammenfederbaren Stützbeinen (16) versehen ist, die beim Einsetzen des Verankerungsteils (2) den Lochrand (20) von der Rückseite hintergreifen,
**dadurch gekennzeichnet,** daß der Hohlschaft (14) zwischen den Stützbeinen (16) ebenfalls durch achsparallele Schlitze (27) geteilt ist.

## Claims

1. An adjustable spacer of plastics material for fixing two plate-shaped components at a variable spacing, comprising an anchorage member which can be inserted in a fixing hole in the one component and which has a hollow shank with an internal screwthread, and a fixing screw which can be screwed into the shank and which has a support head and a central hole therethrough, characterised in that the fixing screw (1) has beneath the screwthreaded shank (4) a dowel-like spreading portion (6) with a plurality of slits and with a reduced-width through hole (12) for screwing in a wood screw (13), and that ribs (10) which are parallel to the axis are provided on the dowel segments (8) formed by the longitudinal slits (7) on the outside peripheral surface (9) of the dowel segments (8) while the hollow shank (14) of the anchorage member (2) is provided beneath the internal screwthread (21) with grooves (23) which are parallel to the axis and into which the ribs (10) positively lockingly engage when the dowel segments (8) are spread open by the screw (13) being screwed in.

2. An adjustable spacer according to claim 1 characterised in that the outside diameter 'd' of the spreading portion (6) is equal to the core diameter 'k' of the screwthreaded shank (4), that in addition the contact diameter 'b' of the ribs (10) is equal to the outer screwthread diameter 'g' of the screwthreaded shank (4) and slightly less than the contact diameter 'B' of the grooves (23) and that finally the internal screwthread (21) of the anchorage member (2) comprises only a single thread flight (21) which, in accordance with the position of the ribs (10) on the outside peripheral surface (9) of the spreading portion (6), is interrupted by openings (22) which are distributed at the same spacing.

3. An adjustable spacer according to claim 1 or claim 2 wherein the screwthreaded shank (4) of the anchorage member (2) lies with an upper flange (15) on the edge (20) of the fixing hole (17) and at the lower end is provided with inclinedly upwardly projecting support legs (16) which can be sprung together and which engage behind the edge (20) of the hole from the rear side when the anchorage member (2) is inserted characterised in that the hollow shank (14) is also divided by slits (27) which are parallel to the axis between the support legs (16).

## Revendications

1. Entretoise en matière plastique règlable pour la fixation en position de deux éléments de construction de forme plate, avec possibilité de modifier leur intervalle de séparation, se composant d'une patte d'ancrage creuse à filetage intérieur pour emmanchement dans un trou de fixation prévu à cet effet dans un des deux éléments et d'une vis de règlage munie d'une tête d'appui et d'un trou débouchant se vissant dans le corps de la patte, **se caractérisant par le fait** que la vis de règlage (1) présente, en-dessous du corps fileté (4) un segment expansible en forme de cheville comportant plusieurs fentes (6) avec un orifice de passage de section rétrécie (12) pour le vissage d'une vis en bois (13) et que des nervures (10) parallèle à l'axe sont ménagées sur l'enveloppe extérieure (9) des segments de cheville (8) définis par la fente longitudinale (7), cependant que la tige creuse (14) de la patte d'ancrage (2) est munie, en-dessous du filetage intérieur (21) de nervures parallèles à l'axe (23), dans lesquelles les nervures (10) viennent s'encastrer, par l'action mécanique résultant de leur forme, lors de l'expansion du segment de cheville (8) sous l'effet exercé par le serrage de la vis (13).

2. Entretoise règlable suivant la revendication 1, se caractérisant par le fait que le diamètre extérieur "d" du segment expansible (6) est égal au diamètre sur sommet de filet "k" du corps fileté (4), que par ailleurs le diamètre de contact "b" des nervures (10) est égal au diamètre à fond de filet "g" du corps fileté (4) et est très légèrement plus petit que le diamètre de contact "B" des nervures (23) et qu'enfin le filetage intérieur (21) de la patte d'ancrage (2) ne se compose que d'un seul et unique filet (21) qui, en fonction de la position des nervures (10) et de l'enveloppe extérieure (9) du segment expansible (6), est interrompu par des évidements (22) à répartition équidistante.

3. Entretoise règlable suivant la revendication 1 ou 2, dans laquelle le corps fileté (4) de la patte d'ancrage (2) prend appui au moyen d'une bride supérieure (15) sur le bord (20) de l'orifice de fixation (17) et est muni de pattes d'appui (16) faisant saillie vers le haut et compressibles par effet élastique qui, lors de la mise en place de la patte d'ancrage (2) viennent agripper par derrière le bord du trou(20), **se caractérisant par le fait** que la tige creuse (14) est coupée, entre les pattes d'appui (16) également par des fentes (27) parallèle à l'axe.
